# EUROPÄISCHE PATENTSCHRIFT

(11) **EP 3 383 954 B1**
(45) Veröffentlichungstag und Bekanntmachung des Hinweises auf die Patenterteilung: **23.09.2020**
(21) Anmeldenummer: 16810070.9
(22) Anmeldetag: 02.12.2016
(51) Int. Cl.: C08L 83/04

(54) **PHOTOAKTIVIERBARE MEHRKOMPONENTENSYSTEME ZUR HERSTELLUNG EINER GESCHÄUMTEN SILIKONZUSAMMENSETZUNG**
PHOTOACTIVATABLE MULTI-COMPONENT SYSTEMS FOR PRODUCING A FOAMED SILICONE COMPOSITION
SYSTÈMES PHOTOACTIVABLES À COMPOSANTS MULTIPLES POUR LA PRÉPARATION D'UNE COMPOSITION MOUSSÉE DE SILICONE

(30) Priorität: 03.12.2015 DE 102015121053
(43) Veröffentlichungstag der Anmeldung: 10.10.2018
(73) Patentinhaber: Sonderhoff Chemicals GmbH, 50829 Köln (DE)
(72) Erfinder: SISTEMICH, Alexander, 52134 Herzogenrath (DE); WELSCH, Volker, 50825 Köln (DE); LINK, Alfred, 50259 Pulheim (DE)
(74) Vertreter: Henkel IP Department
(86) Internationale Anmeldenummer: PCT/IB2016/057300
(87) Internationale Veröffentlichungsnummer: WO 2017/093959

(56) Entgegenhaltungen:
- JP-A- 2014 167 067
- US-A- 6 084 002

## Beschreibung

Die Erfindung betrifft die Verwendung eines Mehrkomponentensystems sowie ein Verfahren zur Herstellung einer in-situ an einem Bauteil angeschäumten Dichtung ("FIPFG" (Formed in Place Foam Gasket)) gemäß dem Oberbegriff von Anspruch 1 und dem Patentanspruch 15.

Um Gehäuse aller Art, z.B. Schaltschränke, Leuchten, Fässer (Emballagen), Filtergehäuse etc. abzudichten, werden seit Jahrzehnten elastische Dichtungen wie z.B. Gummiringe aus Vollmaterial oder aber schaumartige Materialien wie Moosgummi eingesetzt. Diese werden in vielgestaltigsten Formen und Verfahren hergestellt und in die Gehäuse eingebracht.

Seit einigen Jahrzehnten hat sich auch die Technik, schäumende und nicht schäumende Materialien in flüssiger Form direkt auf Gehäuseteile aufzubringen durchgesetzt, wo sie chemisch reagieren und einen geeigneten Dichtungskörper ausbilden. Diese Technik wird oft als "FIPG" (Formed in Place Gasket), "FIPFG" (Formed in Place Foam Gasket) oder auf Deutsch als "in-situ an einem Bauteil angeschäumte Dichtung" bezeichnet.

Für viele übliche Gehäuse, wie Schaltschränke oder Emballagen, sind nur schaumartige Dichtungsmaterialien geeignet, da durch die Verminderung der Gehäuse-Wandstärken (aus Wirtschaftlichkeitsgründen) nur mittlere bis geringe Kompressionskräfte erlaubt sind. Daher werden in den meisten der derartigen Anwendungsbereiche geschäumte Dichtungen eingesetzt, da diese weicher sind als Dichtungen aus Vollmaterial. Hierbei kommen üblicherweise Polyurethane oder Silikone als Dichtungsmaterialien zur Anwendung.

Der Einsatz von Silikonschäumen als Dichtstoff ist aus dem Stand der Technik bekannt. Silikonschäume werden von zahlreichen Anbietern für verschiedene Applikationen bereitgestellt. Solche Produkte werden beispielsweise von den Firmen Sonderhoff, Wacker (Silikonkautschuk Elastosil) oder Dow Chemical angeboten. Entsprechende Schäume werden beispielsweise in den EP 0 691 365 B1 und WO 00/46282 beschrieben.

Aus der JP 2014 167067 A ist die Herstellung einer geschäumten Silikonzusammensetzung bekannt, bei der als Ausgangsstoffe a) ein Polyorganosiloxan, b) ein Polyhydrogenorganosiloxan und c) ein photoaktivierbarer Katalysator verwendet werden. Nach dem Zusammenmischen der Ausgangsstoffe und vor dem Auftragen der Silikonzusammensetzung wird dieser ein Gas hinzugegeben, wodurch ein Schaum ausgebildet wird. Bei der Herstellung von in-situ an einem Bauteil angeschäumten Dichtungen (FIPFG) ist es entscheidend, dass die flüssig aufgebrachte, reaktive Mischung sich vor dem Aufschäumen eine ausreichend lange Zeit im flüssigen Zustand befindet, um eine Verschmutzung und/oder Verstopfung der Dosiereinheit zu vermeiden und außerdem Kopplungsvorgänge auf der Dichtkontur zu ermöglichen (bei Gehäusedichtungen handelt es sich in der Regel um geschlossene Konturen). Man spricht hier von der sogenannten "Startzeit" oder "Topfzeit", die möglichst lang sein soll.

Gleichzeitig ist es aus Gründen der Produktivität höchst wünschenswert, dass die flüssig aufgebrachte Mischung möglichst schnell trocken und ausreagiert ist, sodass das Gehäuse verschlossen werden kann, ohne die Rückstellfähigkeit der frisch hergestellten Dichtung zu beeinträchtigen und die Dichtung dauerhaft zu verformen. Man spricht hier von der sogenannten "Montagezeit" oder "Klebfreizeit", die möglichst kurz sein soll.

Die Anforderungen an die Topfzeit und die Montagezeit sind also konträr. Um diese konträren Anforderungen zu erfüllen, sind in der Patentliteratur viele spezielle Katalysatoren und Verfahren bekannt, die zu einer möglichst langen Startzeit führen, gefolgt von einer möglichst raschen, lawinenartigen chemischen Reaktion, bis hin zur vollständigen Härtung.

In der DE 691 07 878 T2 wird beispielsweise ein Verfahren zur Kontrolle der Härtungsgeschwindigkeit von Silikonschaum beschrieben. In dem beschriebenen Verfahren wird die Härtezeit einer schäumbaren Silikonzusammensetzung über ein wässeriges Phosphorsäureester/Kaliumhydroxid-Puffer-System gesteuert.

Das Reaktionsgemisch wird üblicherweise mittels eines Roboters auf das zu beschäumende Teil aufgebracht. Die Verarbeitung erfolgt vorzugsweise bei Raumtemperatur, wobei ein anschließendes Tempern zur Verkürzung der Klebfreizeit und insbesondere zur Erzielung eines optimalen Rückstellverhaltens (Druckverformungsrest) üblich ist.

Um eine schnelle Aushärtung bei Raumtemperatur zu erreichen bzw. die Temperzeiten und -temperaturen möglichst kurz bzw. niedrig zu halten, ist in den derzeit üblichen Verfahren eine große Menge an Platin-Katalysatoren notwendig (siehe Patent EP 0 691 365 B1).

Zudem ist die oben erläuterte Grundanforderung einer möglichst langen Startzeit und einer möglichst kurzen Klebfreizeit bei den üblichen Silikonschaum-Systemen nur unzureichend erfüllt. Es ist wünschenswert, die Aushärtung zu beschleunigen, ohne jedoch die Startzeit des Reaktionsgemisches zu verkürzen. Eine verkürzte Startzeit führt zu erhöhter Verschmutzung der Mischelemente, was dann zu erhöhten Wartungsaufwänden führt. Zudem erschwert eine kurze Startzeit bei geschlossenen Dichtungen das Ineinanderfließen von Start- und Endpunkt der Dichtung, was zu einer unerwünschten Erhöhung der Dichtung in diesem Bereich führt.

Um bei den hohen Platingehalten die Startzeit zu verlängern, werden daher zusätzlich Inhibitoren eingesetzt, die hauptsächlich die Startzeit verlängern ohne jedoch die Aushärtezeit signifikant zu verlängern. Diese Inhibitoren haben neben der Verlängerung der Aushärtezeit den Nachteil, dass sie im Vergleich zu den Silikon-Basispolymeren deutlich teurer sind und somit auch den Preis der Formulierung erhöhen.

Um bei den derzeit üblicherweise verwendeten Silikonschaum-Systemen die Topfzeit und die Montagezeit möglichst genau auf die gewünschten Werte einzustellen, ist somit ein hoher Anteil an Platin-Katalysatoren nötig, die gleichzeitig von Inhibitoren inhibiert werden.

Gleichzeitig haben die üblicherweise verwendeten Silikonschaum-Systeme den Nachteil, dass ein Anpassen der Topfzeit an geänderte Verfahrensbedingungen im laufenden Betrieb nicht ohne weiteres möglich ist. Das verwendete Silikonschaum-System müsste derzeit komplett durch ein entsprechend anders eingestelltes Silikonschaum-System ausgetauscht werden.

Ein weiterer Nachteil der Systeme ist, dass die Reaktion der Silikonschaum-Systeme nach dem Zusammenmischen (Aktivieren) der einzelnen Komponenten nicht mehr ohne Weiteres aufgehalten werden kann. Sofern sich bereits ein aktiviertes Silikonschaum-System in den Zuleitungsschläuchen und/oder Düsen der Anlage befindet und es zu einem systembedingten Ausfall (z. B. einem Stromausfall) kommt, müssen die Mischkammer und/oder Düsen gespült bzw. nach dem Ausreagieren der Systeme aufwendig gereinigt werden.

Der vorliegenden Erfindung liegt die primäre Aufgabe zugrunde, eine Verwendung und ein Verfahren mit einem Silikonschaum-System bereitzustellen, bei dem die Topf- und Montagezeit auf einfache Weise gesteuert werden kann.

Eine weitere Aufgabe der vorliegenden Erfindung besteht darin, die Kosten bei der Verwendung des Silikonschaum-Systems und bei Durchführung des Verfahrens zu reduzieren.

Weitere Aufgaben der vorliegenden Erfindung ergeben sich aus der nachfolgenden Beschreibung sowie insbesondere aus den beigefügten Patentansprüchen.

Diese Aufgaben werden erfindungsgemäß durch die Verwendung gemäß Patentanspruch 1 und das Verfahren gemäß Patentanspruch 15 gelöst. Bevorzugte Ausführungsformen der Erfindung sind in den Unteransprüchen angegeben.

Es hat sich überraschenderweise gezeigt, dass durch die Verwendung eines photoaktivierbaren Katalysators in Mehrkomponentensystemen zur Herstellung einer geschäumten Silikonzusammensetzung die Topf- und Montagezeit sehr genau eingestellt werden kann. Dies ist gerade bei geschäumten Silikonzusammensetzung unerwartet gewesen, da man bisher davon ausgegangen ist, dass eine Durchstrahlung mit Licht, aufgrund der durch die Schaumstruktur auftretenden starken Lichtbrechung, nicht möglich ist und somit kein schnelles Ausreagieren innerhalb der gewünschten Montagezeit erreicht werden kann.

Unter einem "Mehrkomponentensystem" wird generell ein System verstanden, das aus zwei, drei, vier oder mehr voneinander räumlich getrennten, reaktionsfähigen Komponenten besteht, die zur Umsetzung gemischt und erforderlichenfalls noch weiter behandelt werden. Die einzelnen Bestandteile des erfindungsgemäßen Mehrkomponentensystems sind somit auf zwei, drei, vier oder mehr getrennte Komponenten aufgeteilt, wobei das Polyhydrogenorganosiloxan b) einer ersten Komponente I) und der photoaktivierbare Katalysator c) einer zweiten Komponente II) zugeordnet ist. Eine Komponente ist somit räumlich von anderen Komponenten getrennt und kann aus mehreren Bestandteilen bestehen.

Der photoaktivierbare Katalysator liegt als Additiv in mindestens einer Komponente vor, wo er inaktiv ist. Nach dem Mischen sämtlicher Komponenten bleibt der photoaktivierbare Katalysator ohne eine Aktivierung durch Lichtstrahlung (vorzugsweise UV-Strahlung) annähernd inaktiv und die Topfzeit des durch Mischung der Komponenten entstehenden Reaktionsgemisches liegt im Bereich von mehreren Stunden bis Tagen. Erfindungsgemäß bevorzugt sind Mehrkomponentensysteme zur Herstellung einer geschäumten Silikonzusammensetzung, bei denen die Topfzeit der durch Mischen sämtlicher Komponenten entstehenden Reaktionsmischung mehr als eine Stunde, vorzugweise mehr als vier Stunden, bevorzugt mehr als 12 Stunden, besonders bevorzugt mehr als 24 Stunden beträgt, wenn die Reaktionsmischung nicht durch Lichteinstrahlung (Lagerung unter Lichtausschuss) aktiviert wird.

Erfindungsgemäß bevorzugt wird ein Mehrkomponentensystem verwendet, bei dem es sich um ein Zweikomponentensystem handelt, d. h, dass die einzelnen Bestandteile auf zwei Komponenten aufgeteilt werden. Zweikomponentensysteme sind in der Praxis am gebräuchlichsten, da im laufenden Betrieb lediglich zwei Komponenten verwendet und überwacht werden müssen. Dies erleichtert insbesondere die Logistik und Lagerung des Mehrkomponentensystems.

Erfindungsgemäß handelt es sich bei dem Treibmittel d) um eine Verbindung mit einer, zwei oder mehr Hydroxylgruppen oder um eine Mischung aus Verbindungen mit einer, zwei oder mehr Hydroxylgruppen handelt, vorzugsweise um Wasser, einen Alkohol oder Mischungen daraus.

Es hat sich in eigenen Untersuchungen gezeigt, dass diese Treibmittel am besten geeignet sind, da das Ausschäumen bei diesen Treibmitteln erst durch die Aktivierung des photoaktivierbaren Katalysators c) induziert wird.

Besonders bevorzugt ist eine erfindungsgemäße Verwendung eines Mehrkomponentensystems, bei dem der Alkohol ein ein-, zwei- oder mehrwertiger Alkohol mit 1 bis 10 Kohlenstoffatomen ist, vorzugsweise Methanol, Ethanol, Propanol, vorzugsweise Isopropanol, Butanol, vorzugsweise 1-Butanol, 1,4-Butandiol, Laurylalkohol, Octylalkohol, 2-Ethylhexanol oder Ethylenglycol ist.

In einer bevorzugten Ausgestaltung der erfindungsgemäßen Verwendung wird als Treibmittel d) eine Mischung aus Wasser und einem ein- oder zweiwertigen Alkohol mit 1 bis 10 Kohlenstoffatomen verwendet, vorzugsweise eine Mischung aus Wasser und einem Alkohol ausgewählt aus der Gruppe bestehend aus Methanol, Ethanol, Propanol, vorzugsweise Isopropanol, Butanol, vorzugsweise 1-Butanol, 1,4-Butandiol, Laurylalkohol, Octylalkohol, 2-Ethylhexanol oder Ethylenglycol, besonders bevorzugt eine Mischung aus Wasser und Butanol, vorzugsweise 1-Butanol.

In einer anderen ebenfalls bevorzugten Ausgestaltung der Erfindung wird als Treibmittel d) nur Wasser verwendet.

Insbesondere Wasser und die oben aufgeführten niedermolekulare Alkohole zeichnen sich durch ihre toxische Unbedenklichkeit aus. Zudem hat sich in eigenen Untersuchungen gezeigt, dass insbesondere bei kleinen Molekülen eine hohe Treibgasausbeute/Schaumausbeute pro eingesetzter Gewichtseinheit des Treibmittels d) erzielt werden kann.

Im Rahmen der vorliegenden erfindungsgemäßen Verwendung ist ein erfindungsgemäßes Mehrkomponentensystem bevorzugt, bei dem das Treibmittel d) mindestens 0,01 und/oder maximal 10,0 Gew.-% beträgt, vorzugsweise mindestens 0,05 und/oder maximal 5,0 Gew.-% beträgt, bevorzugt mindestens 0,1 und/oder maximal 2,0 Gew.-% beträgt, ganz besonders bevorzugt mindestens 0,3 und/oder maximal 1,4 Gew.-% beträgt, bezogen auf die Gesamtmenge des Mehrkomponentensystems.

Durch die Verwendung eines Treibmittels ist es möglich, dass das Mehrkomponentensystem nach dem Zusammenmischen sämtlicher Komponenten unter Ausbildung einer Reaktionsmischung und dem anschließenden Aktivieren mit Licht einen Schaum ausbildet. Ohne die Anwesenheit eines Treibmittels oder bei zu geringen Mengen eines vorhandenen Treibmittels erfolgt keine Ausbildung eines Schaumes und es wird lediglich eine ungeschäumte Silikonzusammensetzung erhalten. Insbesondere die Anwesenheit von Spuren (kleiner als 0,001 Gew.-%) eines Treibmittels ist nicht ausreichend, um die Ausbildung eines Schaumes zu ermöglichen.

Erfindungsgemäß bevorzugt ist es, wenn das Treibmittel d) der zweiten Komponente II) zugeordnet ist.

Gemäß einer bevorzugten Ausgestaltung der vorliegenden Erfindung weist das Polyorganosiloxan a) im Mittel mindestens zwei ungesättigte organische Gruppen pro Molekül auf, vorzugsweise im Mittel mindestens zwei Vinylgruppen pro Molekül auf, besonders bevorzugt im Mittel zwei terminale Vinylgruppen pro Molekül auf.

Dem Fachmann ist bewusst, dass bei Polymeren eine Funktionalisierung bzw. eine Endgruppenfunktionalisierung mit z. B. Vinylgruppen nicht immer vollständig verläuft, sodass auch nach durchgeführter Funktionalisierung Polymere verbleiben, die nicht, nur einfach, oder mehr als zweifach funktionalisiert sind. Mit dem Ausdruck "im Mittel mindestens zwei Gruppen pro Molekül" ist daher gemeint, dass bei dem eingesetzten Bestandteil die einzelnen Polymermoleküle im Mittel über sämtliche Polymermoleküle gleichen Typs mit mindestens zwei Gruppen funktionalisiert sind.

Bevorzugt ist die erfindungsgemäße Verwendung eines Mehrkomponentensystems, bei der das Polyorganosiloxan a) ein Polyalkylsiloxan, Polyphenylsiloxan oder Polyfluoralkylsiloxan ist, vorzugsweise ein Polydimethylsiloxan ist.

Ebenfalls bevorzugt ist erfindungsgemäß die Verwendung eines Mehrkomponentensystems, bei dem das Polyorganosiloxan a) eine Viskosität von 25 bis 1 000 000 mPa s, bevorzugt 50 bis 200 000 mPa s, besonders bevorzugt 1 000 bis 100 000 mPa s (20°C) aufweist.

Im Rahmen der vorliegenden Erfindung besonders bevorzugte Polyorganosiloxane a) werden in den Absätzen [0004] bis [0007] des Europäischen Patentes mit der Nummer EP 1 817 372 B1 näher beschrieben und werden dort in den Absätzen [0008] bis [0021] weiter spezifiziert. In dieser Hinsicht wird Bezug genommen auf das Europäische Patent mit der Nummer EP 1 817 372 B1, deren Absätze [0004] bis [0007] und [0008] bis [0021] hiermit in diese Anmeldung aufgenommen werden.

Besonders bevorzugt kommt bei der Erfindung ein Mehrkomponentensystem zu Einsatz, bei dem das Polyorganosiloxan a) ein Polydimethylsiloxan ist, bei dem die Methyl-Gruppen zu mindestens 90 mol-% bezogen auf die Si-Atome vorliegen, bevorzugt 90 bis 99,99 mol-%.

Um die mechanischen Eigenschaften, wie die Weiterreißfestigkeit der geschäumten Silikonzusammensetzung und/oder um die Viskosität der Komponenten einzustellen, werden in einer bevorzugten Ausgestaltung der vorliegenden Erfindung zweckmäßig Abmischungen aus zwei, drei, vier oder mehr verschiedenen Polyorganosiloxanen mit unterschiedlichem Alkenylgehalt und/oder unterschiedlicher Kettenlänge eingesetzt.

Ebenfalls bevorzugt ist es, wenn das Polyorganosiloxan a) der ersten Komponente I) und/oder der zweiten Komponente II) zugeordnet ist.

Darüber hinaus ist bei der erfindungsgemäßen Verwendung ein Mehrkomponentensystem bevorzugt, bei dem das Polyhydrogenorganosiloxan b) ein lineares, cyclisches oder verzweigtes SiH-haltiges Polyorganosiloxan ist, das im Mittel mindestens zwei SiH-Gruppen pro Molekül aufweist, vorzugsweise mindestens fünf SiH-Gruppen pro Molekül aufweist, besonders bevorzugt mindesten zehn SiH-Gruppen pro Molekül aufweist.

Besonders bevorzugt weist ein erfindungsgemäß verwendetes Polyhydrogenorganosiloxan b) einen SiH-Gehalt von mehr als 2 mmol/g, bevorzugt mehr als 7 mmol/g, besonders bevorzugt einen Si-H-Gehalt von mehr als 10 mmol/g auf, insbesondere bevorzugt einen SiH-Gehalt von 14 bis 16 mmol/g auf, bezogen auf das Gesamtgewicht des jeweils eingesetzten Polyhydrogenorganosiloxans b).

Besonders bevorzugt ist kommt der Erfindung ein Mehrkomponentensystem zum Einsatz, bei dem das Polyhydrogenorganosiloxan b) eine Viskosität bei 25°C zwischen 5 und 35 mm²/s aufweist, vorzugsweise eine Viskosität zwischen 10 und 20 mm²/s, besonders bevorzugt eine Viskosität zwischen 13 und 18 mm²/s aufweist, ganz besonders bevorzugt eine Viskosität von 15 mm²/s aufweist.

In einer Ausgestaltung der vorliegenden Erfindung werden bevorzugt Abmischungen aus zwei, drei, vier oder mehr verschiedenen Polyhydrogenorganosiloxanen eingesetzt. Dabei ist besonders bevorzugt wenn zumindest eines der verwendeten Polyhydrogenorganosiloxane
i) im Mittel mindestens zwei SiH-Gruppen pro Molekül aufweist, vorzugsweise mindestens fünf SiH-Gruppen pro Molekül aufweist, besonders bevorzugt mindesten zehn SiH-Gruppen pro Molekül aufweist
   und/oder
ii) einen SiH-Gehalt von mehr als 2 mmol/g, bevorzugt mehr als 7 mmol/g, besonders bevorzugt einen Si-H-Gehalt von mehr als 10 mmol/g aufweist, insbesondere bevorzugt einen SiH-Gehalt von 14 bis 16 mmol/g aufweist, bezogen auf das Gesamtgewicht des eingesetzten Polyhydrogenorganosiloxans b)
   und/oder
iii) eine Viskosität bei 25°C zwischen 5 und 30 mm²/s aufweist, vorzugsweise eine Viskosität zwischen 10 und 20 mm²/s, besonders bevorzugt eine Viskosität zwischen 13 und 18 mm²/s aufweist, ganz besonders bevorzugt eine Viskosität von 15 mm²/s aufweist.

Besonders bevorzugt wird ein Mehrkomponentensystem verwendet, wobei das Polyhydrogenorganosiloxan b) ein Methylhydrogenpolysiloxan oder ein Trimethylsiloxy-endgestopptes Polydimethylhydrogenmethylsiloxan ist.

Weitere im Rahmen der vorliegenden Erfindung bevorzugte Polyhydrogenorganosiloxane b) werden in den Absätzen [0022] und [0023] des Europäischen Patentes mit der Nummer EP 1 817 372 B1 näher beschrieben und werden dort in den Absätzen [0024] bis [0040] weiter spezifiziert. In dieser Hinsicht wird Bezug genommen auf das Europäische Patent mit der Nummer EP 1 817 372 B1, deren Absätzen [0022] bis [0023] und [0024] bis [0040] hiermit in diese Anmeldung aufgenommen werden.

Besonders bevorzugt ist bei der erfindungsgemäßen Verwendung ein Mehrkomponentensystem, wobei der eine, die zwei, drei oder mehr Füllstoffe ausgewählt ist bzw. sind aus der Gruppe bestehend aus funktionellen Silikon-Harzen (Harzverstärkung), mikronisiertem Polyethylen (PE), mikronisiertem Polypropylen (PP), mikronisiertem Naturwachs, Modifizierungen aus mikronisiertem Polyethylen (PE), mikronisiertem Polypropylen (PP) oder mikronisiertem Naturwachs, Polyethylenkurzfasern, Polypropylenkurzfasern, mikronisierten thermoplastischen Hohlkugeln, PMMA-Pulver, Teflon-Pulver, SiO₂-Nanopartikeln, pyrogenen Kieselsäuren, gefällten Kieselsäuren, Talkum, Titandioxid, Magnesiumoxid, Zinkoxid, Eisenoxid, Chromoxid, Zirkoniumoxid, Aluminiumoxid, Aluminiumhydroxid, Glasfasern, mikroskopischen Glaskugeln, Hohlglaskugeln, Quarz, Ton, Lithoponen, Zirkoniumsilikat, Siliciumdioxidaerogel, Diatomeenerde, Kalziumcarbonat, Cristobalitmehle, Feldspat, Feldspatderivate, Glimmer, Kreiden, Ruß und Graphit.

Ebenfalls bevorzugt ist eine Verwendung eines Mehrkomponentensystems, bei dem zumindest einer der Füllstoffe nanoskalige oder mikroskalige, funktionelle Silikon-Harzpartikel umfasst oder daraus besteht, die mit mehr als zwei ungesättigten organischen Gruppen, vorzugsweise mit mehr als zwei Vinylgruppen funktionalisiert sind.

Erfindungsgemäß bevorzugt kommt ein Mehrkomponentensystem zur Verwendung, bei dem der eine, die zwei, drei oder mehr Füllstoffe eine BET-Oberfläche von 50 bis 400 m²/g aufweist bzw. aufweisen.

Erfindungsgemäß bevorzugt wird die Verwendung eines Mehrkomponentensystems, bei dem der eine oder zwei, drei oder mehr der zwei, drei oder mehr Füllstoffe mit mindestens einem reaktiven Silan oberflächenmodifiziert sind.

Oberflächenmodifizierte Füllstoffe, insbesondere wenn sie mit Silanen oberflächenmodifiziert sind, werden beim Vernetzen der einzelnen Bestandteile in das Polymersystem eingebaut und verbessern somit u.a. die Festigkeit der hergestellten geschäumten Silikonzusammensetzung.

Erfindungsgemäß bevorzugt wird eine Verwendung eines Mehrkomponentensystems, bei dem der eine oder zwei, drei oder mehr der zwei, drei oder mehr Füllstoffe hydrophob sind.

Bevorzugt ist weiter die Verwendung eines Mehrkomponentensystems, bei dem der eine, die zwei, drei oder mehr Füllstoffe e) jeweils der ersten Komponente I) und/oder der zweiten Komponente II) zugeordnet ist bzw. sind.

Erfindungsgemäß bevorzugt wird eine Verwendung eines Mehrkomponentensystems, bei dem der photoaktivierbare Katalysator c) ein photoakivierbarer Hydrosilylierungskatalysator ist, der mindestens ein Metall enthält, das ausgewählt ist aus der Gruppe bestehend aus Platin, Palladium, Rhodium, Nickel, Iridium und Ruthenium, vorzugsweise Platin enthält.

Erfindungsgemäß bevorzugt ist es, wenn der photoaktivierbare Katalysator c) eine organometallische Verbindung ist.

Der photoaktivierbare Katalysator kann insbesondere c) ein η-Diolefin-σ-aryl-Platin-Komplex, ein (η-diolefin)-(sigma-aryl)-Platin-Komplex oder ein (η-diolefin) (sigma-alkyl)-Platin-Komplex sein.

Erfindungsgemäß bevorzugt wird die Verwendung eines Mehrkomponentensystems, bei dem der photoaktivierbare Katalysator c) ausgewählt ist aus der Gruppe bestehend aus
η⁵-(Methylcyclopentadienyl)trimethylplatin, η⁵-(Cyclopentadienyl)trimethylplatin, η⁵-(Cyclopentadienyl)ethyldimethylplatin, n⁵-(Cyclopentadienyl)triethylplatin, η⁵-(Cyclopentadienyl)triallylplatin, n⁵-(Cyclopentadienyl)tripentylplatin, η⁵-(Cyclopentadienyl)trihexylplatin, η⁵-(Trimethylsilylcyclopentadienyl)trimethylplatin, η⁵-(Phenyldimethylsilyl-cyclopentadienyl)trimethylplatin, η⁵-(Cyclopentadienyl)acetyldimethylplatin, η⁵-(Cyclopentadienyl)diethylmethylplatin, η⁵-(Cyclopentadienyl)triisopropylplatin, n⁵-(Cyclopentadienyl)tri(2-butyl)platin, η⁵-(Cyclopentadienyl)triallylplatin, n⁵-(Cyclopentadienyl)trinonylplatin, η⁵-(Cyclopentadienyl)tridodecylplatin, n⁵-(Cyclopentadienyl)tricyclopentylplatin, η⁵-(Cyclopentadienyl)tricyclohexylplatin, n⁵-(Chloro-cyclopentadienyl)trimethylplatin, η⁵-(Fluoro-cyclopentadienyl)trimethylplatin, n⁵-(Cyclopentadienyl)dimethylbenzylplatin, η⁵-(Triethylsilyl-cyclopentadienyl)trimethylplatin, η⁵-(Dimethylphenylsilyl-cyclopentadienyl)trimethylplatin, η⁵-(Methyldiphenylsilyl-cyclopentadienyl)trimethylplatin, η⁵-(Triphenylsilyl-cyclopentadienyl)trihexylplatin, η⁵-[1,3-bis(Trimethylsilyl)-cyclopentadienyl]trimethylplatin, η⁵-(Dimethyloctadecylsilyl-cyclopentadienyl)trimethylplatin, 1,3-bis[η⁵-(Cyclopentadienyl)trimethylplatin]tetramethyldisiloxan, 1,3-bis[η⁵-(Cyclopentadienyl)trimethylplatin]dimethyldiphenyldisiloxan, 1,3-bis[η⁵-(Cyclopentadienyl)dimethylphenylplatin]tetramethyldisiloxan, 1,3,5-Tris[η⁵-(Cyclopentadienyl)trimethylplatin]pentamethyltrisiloxan, 1,3,5,7-tetra[η⁵-(Cyclopentadienyl)trimethylplatin]heptamethyltetrasiloxan, (Methoxy-cyclopentadienyl)trimethylplatin, (Ethoxymethyl-cyclopentadienyl)ethyldimethylplatin, (Methyoxycarbonyl-cyclopentadienyl)trimethylplatin, (1,3-Dimethyl-cyclopentadienyl)trimethylplatin, (Methyl-cyclopentadienyl)triisopropylplatin, (1,3-Diacetyl-cyclopentadienyl)diethylmethylplatin, (1,2,3,4,5-Pentachloro-cyclopentadienyl)trimethylplatin, (Phenyl-cyclopentadienyl)trimethylplatin, η⁵-(Cyclopentadienyl)acetyldimethylplatin, η⁵-(Cyclopentadienyl)propionyldimethylplatin, η⁵-(Cyclopentadienyl)acryloyldimethylplatin, η⁵-(Cyclopentadienyl)di(methacryloyl)ethylplatin, η⁵-(Cyclopentadienyl)dodecanoyldimethylplatin, Trimethylplatincyclopentadienylendständiges Polysiloxan, (1,5-Cyclooctadien)diphenylplatin, (1,3,5,7-Cyclooctatetraen)diphenylplatin, (2,5-NBD)diphenylplatin, (3a,4,7,7a-tetrahydro-4,7-methanoindene)diphenylplatin, (1,5-Cyclooctadien)-bis(4-methylphenyl)platin, (1,5-Cyclooctadien)-bis(2-methylphenyl)platin. (1,5-Cyclooctadien)-bis(2-methoxyphenyl)platin, (1,5-Cyclooctadien)-bis(3-methoxyphenyl)platin, (1,5-Cyclooctadien)-bis(4-phenoxyphenyl)platin, (1,5-Cyclooctadien)-bis(4-methylthiophenyl)platin, (1,5-Cyclooctadien)-bis(3-chlorophenyl)platin, (1,5-Cyclooctadien)-bis(4-fluorophenyl)platin, (1,5-Cyclooctadien)-bis(4-bromophenyl)platin, (1,5-Cyclooctadien)-bis(4-Trifluoromethylphenyl)platin, (1,5-Cyclooctadien)-bis(3-Trifluoromethylphenyl)platin, (1,5-Cyclooctadien)-bis(2,4-bis(Trifluoromethyl)phenyl)platin, (1,5-Cyclooctadien)-bis(4-dimethylaminophenyl)platin, (1,5-Cyclooctadien)-bis(4-acetylphenyl)platin, (1,5-Cyclooctadien)-bis(Trimethylsilyloxyphenyl)platin, (1,5-Cyclooctadien)-bis(Trimethylsilylphenyl)platin, (1,5-Cyclooctadien)-bis(pentafluorophenyl)platin, (1,5-Cyclooctadien)-bis(4-benzylphenyl)platin, (1,5-Cyclooctadien)-bis(1-naphthyl)platin, (1,5-Cyclooctadien)-naphthylphenylplatin, (1,5-Cyclooctadien)-bis(2H-chromen-2-yl)platin, (1,5-Cyclooctadien)-bis(xanthen-1-phenyl)platin, (1,3,5-Cycloheptatriene)diphenylplatin, (1-Chloro-1,5-cyclooctadien)diphenylplatin, (1,5-Dichloro-1,5-cyclooctadien)diphenylplatin, (1-Fluoro-1,3,5,7-cyclooctatetraen)diphenylplatin, (1,2,4,7-Tetramethyl-1,3,5,7-cyclooctatetraen)-bis(4-methylphenyl)platin, (7-Chloro-2,5-NBD)diphenylplatin, (1,3-Cyclohexadiene )diphenylplatin, (1,4-Cyclohexadiene)diphenylplatin, (2,4-Hexadiene)diphenylplatin, (2,5-Heptadiene)diphenylplatin, (1,3-Dodecadiene)diphenylplatin, bis[η 2-2-(2-Propenyl)phenyl] platin, bis[η 2-2-(Ethenylphenyl)platin, bis[η 2-2-(Cyclohexen-1-yl methyl)phenyl]platin, (1,5-Cyclooctadien)Pt(methyl)2, (1,5-Cyclooctadien)Pt(benzyl)2 und (1,5-Cyclooctadien)Pt(hexyl)2, vorzugsweise bei dem der photoaktivierbare Katalysator η⁵-(Methylcyclopentadienyl)trimethylplatin ist.

Erfindungsgemäß bevorzugt wird die Verwendung eines Mehrkomponentensystems, bei dem der photoaktivierbare Katalysator c) bei einer Wellenlänge zwischen 180 und 700 nm photoaktivierbar ist, vorzugsweise bei einer Wellenlänge zwischen 200 und 500 nm photoaktivierbar ist. Es ist bevorzugt, wenn der photoaktivierbare Katalysator c) im UV-Licht aktivierbar ist. Der Anteil an UV-Licht in normalen Sonnenlicht bzw. in Beleuchtungslicht von Produktionshallen ist gering und somit ist es möglich, dass die Komponenten des erfindungsgemäßen Mehrkomponentensystems oder der daraus hergestellten erfindungsgemäßen Reaktionsmischung nicht sofort aktiviert werden, auch wenn eine Bestrahlung mit Licht erfolgt, wie sie im normalen Umgang nicht immer zu vermeiden ist.

Erfindungsgemäß bevorzugt wird die Verwendung eines Mehrkomponentensystems, bei dem der Anteil des photoaktivierbaren Katalysators, bezogen auf das enthaltene Platin, bei 0,5 bis 60 ppm liegt, bevorzugt bei 1 bis 40 ppm, besonders bevorzugt bei 2 bis 20 ppm, bezogen auf das Gesamtgewicht des Mehrkomponentensystems.

In einer Ausgestaltung des bei der erfindungsgemäßen Verwendung zum Einsatz kommenden Mehrkomponentensystems liegt der Anteil des photoaktivierbaren Katalysators bei 0,5 bis 3 Gew.-%, vorzugsweise bei 0,75 bis 2,5 Gew.-%, besonders bevorzugt bei 1 bis 2 Gew.-%, bezogen auf das Gesamtgewicht des Mehrkomponentensystems.

Es hat sich gezeigt, dass auch bei geringen Mengen des Platin-Katalysators eine ausreichend kurze Montagezeit erreicht werden kann, da die Anwesenheit von Inhibitoren nicht mehr durch eine hohe Menge des Platin-Katalysators kompensiert werden muss. Durch die besonders geringen Platinmengen kann zum einen der Preis des erfindungsgemäßen Mehrkomponentensystems erheblich reduziert werden und zum anderen ist der Platingehalt in der hergestellten geschäumten Silikonzusammensetzung geringer. Ein geringer Platingehalt in der hergestellten, geschäumten Silikonzusammensetzung kann die Lebensdauer der Silikonzusammensetzung verlängern, da eine durch das Platin induzierte Alterung der Silikonzusammensetzung verringern könnte. Zwar wird Platin für das Ausschäumen und das Vernetzen des Mehrkomponentensystems benötigt, allerdings kann es auch unerwünschte Alterungsreaktion im fertigen Produkt beschleunigen.

Erfindungsgemäß bevorzugt wird eine Verwendung eines Mehrkomponentensystems, das keine Puffer und/oder Inhibitoren enthält, insbesondere kein Tetravinyltetramethylcyclotetrasiloxan (Vinyl D4) oder Ethinylcyclohexanol (ECH) enthält.

Erfindungsgemäß wird ein Mehrkomponentensystem zur Herstellung einer in-situ an einem Bauteil angeschäumten Dichtung verwendet.

Bei dem erfindungsgemäß verwendeten Mehrkomponentensystem, kann es sich bevorzugt um ein Zweikomponentensystem handeln, wobei
A) die erste Komponente I)

| | |
|---|---|
| 0 bis 99 Gew.-% | Polyorganosiloxan a) |
| 1 bis 100 Gew.-% | Polyhydrogenorganosiloxan b) |
| 0 bis 90 Gew.-% | Füllstoffe e) |
| 0 bis 10 Gew.-% | Additive f), vorzugsweise Additive zur Zellsteuerung von Schäumen |

enthält, bezogen auf das Gesamtgewicht der ersten Komponente I)
und/oder
B) die zweite Komponente II)

| | |
|---|---|
| 10 bis 99,9 Gew.-% | Polyorganosiloxan a) |
| 0,5 bis 60 ppm bezogen auf Platin photoaktivierbaren Katalysator c) | |
| 0,01 bis 10,0 Gew.-%, | vorzugsweise 0,1 bis 5 Gew.-%, besonders bevorzugt |
| 0,2 bis 3,0 Gew.-%, | insbesondere bevorzugt 0,3 bis 2 Gew.-% Treibmittel d), |
| 0 bis 90 Gew.-% | Füllstoffe e) |
| 0 bis 10 Gew.-% | Additive f), vorzugsweise Additive zur Zellsteuerung von Schäumen |

enthält, bezogen auf das Gesamtgewicht der zweiten Komponente II).

Bevorzugt ist bei der erfindungsgemäßen Verwendung ein Mehrkomponentensystem, womit sich nach dem Zusammenmischen sämtlicher Komponenten eine Reaktionsmischung mit folgenden Anteilen herstellen lässt:

| | |
|---|---|
| 10 bis 97,4 Gew.-% | Polyorganosiloxan a), |
| 2 bis 50 Gew.-% | Polyhydrogenorganosiloxan b), |
| 0,5 bis 60 ppm bezogen auf Platin photoaktivierbaren Katalysator c), | |
| 0,01 bis 10,0 Gew.-%, | vorzugsweise 0,1 bis 5 Gew.-%, besonders bevorzugt |
| 0,2 bis 3,0 Gew.-%, | insbesondere bevorzugt 0,3 bis 2 Gew.-% Treibmittel d), |
| 0 bis 90 Gew.-% | Füllstoffe e), |
| 0 bis 10 Gew.-% | Additive f), vorzugsweise Additive zur Zellsteuerung von Schäumen, |

bezogen auf das Gesamtgewicht der Reaktionsmischung.

Durch Mischen aller Komponenten des erfindungsgemäßen Mehrkomponentensystems wird eine Reaktionsmischung zur Herstellung einer geschäumten Silikonzusammensetzung hergestellt.

Die Reaktionsmischung kann durch Zusammenmischen eines Zweikomponentensystems hergestellt werden, wobei die erste Komponente I) und die zweite Komponente II) in einem Verhältnis von 100:1 bis 1:100 Gewichtsteilen gemischt werden, vorzugsweise in einem Verhältnis von 10:1 bis 1:10 Gewichtsteilen gemischt werden, besonders bevorzugt in einem Verhältnis von 3:1 bis 1:3.

Die Reaktionsmischung kann zur Herstellung einer in-situ an einem Bauteil angeschäumten Dichtung dienen.

Erfindungsgemäß bevorzugt ist die Verwendung der weiter oben als bevorzugt oder besonders bevorzugt gekennzeichneten Ausgestaltungsformen eines Mehrkomponentensystems oder einer daraus hergestellten Reaktionsmischung, wobei vorzugsweise mehrere der für das Mehrkomponentensystem oder die Reaktionsmischung beschriebenen Aspekte bzw. der entsprechenden Merkmale miteinander kombiniert werden.

Ein Aspekt der Erfindung ist die Verwendung eines Mehrkomponentensystems umfassend
a) ein Polyorganosiloxan
b) ein Polyhydrogenorganosiloxan
c) einen photoaktivierbaren Katalysator
d) ein Treibmittel
wobei das Polyhydrogenorganosiloxan b) einer ersten Komponente I) und der photoaktivierbare Katalysator c) einer zweiten Komponente II) zugeordnet ist, die voneinander räumlich getrennt sind,
zur Herstellung einer in-situ an einem Bauteil angeschäumten Dichtung, wobei eine durch Mischen der Komponenten des Mehrkomponentensystems resultierende Reaktionsmischung mit Licht bestrahlt wird, wobeiein es sich bei dem Treibmittel d) um eine Verbindung mit zumindest einer Hydroxylgruppe oder um eine Mischung aus Verbindungen mit Hydroxylgruppen handelt. Vorzugsweise handelt es sich bei dem Treibmittel um Wasser, einen Alkohol oder Mischungen daraus handelt.

Erfindungsgemäß bevorzugt ist die Verwendung eines Mehrkomponentensystems, bei dem der Alkohol ein ein-, zwei- oder mehrwertiger Alkohol mit 1 bis 10 Kohlenstoffatomen ist, vorzugsweise Methanol, Ethanol, Propanol, vorzugsweise Isopropanol, Butanol, vorzugsweise 1-Butanol, 1,4-Butandiol, Laurylalkohol, Octylalkohol, 2-Ethylhexanol oder Ethylenglycol ist.

Ebenfalls erfindungsgemäß bevorzugt ist die Verwendung eines Mehrkomponentensystems, bei dem die Menge des Treibmittels d)
0,01 bis 10,0 Gew.-%, vorzugsweise 0,1 bis 5 Gew.-%, besonders bevorzugt 0,2 bis 3,0 Gew.-%, insbesondere bevorzugt 0,3 bis 2 Gew.-%
beträgt, bezogen auf die Gesamtmenge des Mehrkomponentensystems.

Ebenfalls erfindungsgemäß bevorzugt ist die Verwendung eines Mehrkomponentensystems, wobei das Treibmittel d) der zweiten Komponente II) zugeordnet ist.

Ebenfalls erfindungsgemäß bevorzugt ist die Verwendung eines Mehrkomponentensystems, wobei das Polyorganosiloxan a) im Mittel mindestens zwei ungesättigte organische Gruppen pro Molekül aufweist, vorzugsweise im Mittel mindestens zwei Vinylgruppen pro Molekül aufweist, besonders bevorzugt im Mittel zwei terminale Vinylgruppen pro Molekül aufweist.

Ebenfalls erfindungsgemäß bevorzugt ist die Verwendung eines Mehrkomponentensystems, wobei der photoaktivierbare Katalysator ein photoaktivierbarer Hydrosilylierungskatalysator ist, der mindestens ein Metall enthält, das ausgewählt ist aus der Gruppe bestehend aus Platin, Palladium, Rhodium, Nickel, Iridium und Ruthenium, vorzugsweise Platin enthält
und/oder
wobei der photoaktivierbare Katalysator eine organometallische Verbindung ist und/oder
wobei der photoaktivierbare Katalysator ein η-Diolefin-σ-aryl-Platin-Komplex, ein (η-diolefin)-(sigma-aryl)-Platin-Komplex oder ein (η-diolefin) (sigma-alkyl)-Platin-Komplex ist.

Ebenfalls erfindungsgemäß bevorzugt ist die Verwendung eines Mehrkomponentensystems, zur Herstellung von Elektronikbauteilen, Gehäusen, vorzugsweise Schaltschränken, Leuchten, Fass- oder Filtergehäusen.

Ebenfalls erfindungsgemäß bevorzugt ist die Verwendung eines Mehrkomponentensystems, wobei das Mehrkomponentensystem zusätzlich einen, zwei, drei oder mehr Füllstoffe umfasst.

Ebenfalls erfindungsgemäß bevorzugt ist die Verwendung eines Mehrkomponentensystems, wobei das Mehrkomponentensystem zusätzlich Additive umfasst, vorzugsweise Additive zur Zellsteuerung von Schäumen.

Ebenfalls erfindungsgemäß bevorzugt ist die Verwendung eines Mehrkomponentensystems, wobei das Polyorganosiloxan a) ein Polydimethylsiloxan ist, bei dem die Methyl-Gruppen zu mindestens 90 mol-% bezogen auf die Si-Atome vorliegen, bevorzugt 90 bis 99,99 mol-%.

Ebenfalls erfindungsgemäß bevorzugt ist die Verwendung eines Mehrkomponentensystems, wobei das Polyorganosiloxan a) der ersten Komponente I) und/oder der zweiten Komponente II) zugeordnet ist.

Ebenfalls erfindungsgemäß bevorzugt ist die Verwendung eines Mehrkomponentensystems, wobei das Polyhydrogenorganosiloxan b) einen SiH-Gehalt von mehr als 2 mmol/g, bevorzugt mehr als 7 mmol/g, besonders bevorzugt einen SiH-Gehalt von mehr als 10 mmol/g auf, insbesondere bevorzugt einen SiH-Gehalt von 14 bis 16 mmol/g auf, bezogen auf das Gesamtgewicht des jeweils eingesetzten Polyhydrogenorganosiloxans b).

Ebenfalls erfindungsgemäß bevorzugt ist die Verwendung eines Mehrkomponentensystems, wobei das Licht eine Wellenlänge zwischen 180 und 700 nm, besonders bevorzugt zwischen 200 und 500 nm aufweist.

Mit der vorliegenden Erfindung wird auch ein Verfahren zur Herstellung einer in-situ an einem Bauteil angeschäumten Dichtung geschaffen, das die folgenden Schritte umfasst:
- Bereitstellen oder Herstellen eines für die erfindungsgemäße Verwendung vorgesehenen Mehrkomponentensystems,
- Mischen der Komponenten des bereitgestellten oder hergestellten Mehrkomponentensystems, sodass eine Reaktionsmischung entsteht,
- Aufbringen der Reaktionsmischung auf die Oberfläche eines Bauteils und
- Bestrahlen der Reaktionsmischung mit Licht, vorzugsweise mit Licht einer Wellenlänge zwischen 180 und 700 nm, besonders bevorzugt mit Licht einer Wellenlänge zwischen 200 und 500 nm,
wobei eine in-situ an dem Bauteil angeschäumte Dichtung erhalten wird.

Ein bevorzugtes erfindungsgemäßes Verfahren enthält zusätzlich den folgenden Schritt:
- Luftbeladung zur Nukleierung.

Das Bestrahlen der Reaktionsmischung mit Licht erfolgt dabei vorzugsweise mit einer UV-Strahlenquelle, vorzugsweise eine UV-Strahlenquelle ausgewählt aus der Gruppe bestehend aus UV-LED-Lampen, UV-Lasern, Xenonlampen die als Blitzlichtlampen betrieben werden können, undotierte oder mit Eisen oder Gallium dotierte Quecksilberlampen, Schwarzlicht- und Eximerlampen.

Ein weiterer Aspekt der vorliegenden Erfindung betrifft eine in-situ an einem Bauteil angeschäumte Dichtung, die durch ein erfindungsgemäßes Verfahren Die mit der Erfindung in-situ an einem Bauteil angeschäumten Dichtungen unterscheiden sich von den bisher erhältlichen Dichtungen in einem geringen Platingehalt und der Abwesenheit von Puffern und/oder Inhibitoren. Bisher erhältliche geschäumte Dichtungen weisen einen hohen Platingehalt auf und enthalten die für die Steuerung der Topfzeit benötigten Puffer und/oder Inhibitoren. Diese Komponenten werden in der fertigen, angeschäumten Dichtung allerdings nicht mehr benötigt und können zu unerwünschten Nebenreaktion führen und somit zu einer schnelleren Alterung der Dichtung. Dies wird insbesondere beschleunigt, wenn die angeschäumten Dichtungen äußeren Einflüssen, wie Licht oder Chemikalien, ausgesetzt werden.

Mit der Erfindungsgemäßen Verwendung und dem Verfahren nach der Erfindung lässt sich in-situ an einem Bauteil eine Dichtung anschäumen, bei der der Platingehalt bei maximal 60 ppm liegt, bevorzugt maximal 40 ppm, besonders bevorzugt bei maximal 20 ppm liegt, bezogen auf das Gesamtgewicht der Dichtung.

Insbesondere kann der Platingehalt bei 0,5 bis 60 ppm liegen, bevorzugt bei 1 bis 40 ppm, besonders bevorzugt bei 2 bis 20 ppm, bezogen auf das Gesamtgewicht der Dichtung.

Mit der Erfindung ist eine in-situ an einem Bauteil angeschäumte Dichtung erhältlich, wobei die Dichtung keine Puffer und/oder Inhibitoren enthält, insbesondere kein Tetravinyltetramethylcyclotetrasiloxan (Vinyl D4) oder Ethinylcyclohexanol (ECH) enthält.

Ein weiterer Aspekt im Zusammenhang mit der vorliegenden Erfindung betrifft Produkte, insbesondere Elektronikbauteile, Gehäuse, vorzugsweise Schaltschränke, Leuchten, Fässer (Emballagen) oder Filtergehäuse, umfassend eine in-situ an einem Bauteil angeschäumte Dichtung, die nach dem erfindungsgemäßen Verfahren und/oder durch die erfindungsgemäße Verwendung hergestellt wurde.

Im Rahmen der vorliegenden Erfindung werden vorzugsweise mehrere der vorstehend als bevorzugt bezeichneten Aspekte gleichzeitig verwirklicht; insbesondere bevorzugt sind die sich aus den beigefügten Ansprüchen ergebenden Kombinationen solcher Aspekte und der entsprechenden Merkmale.

Die nachfolgenden Beispiele erläutern die Erfindung; sofern nicht anders angegeben, beziehen sich alle Angaben auf das Gewicht.

### Beispiel 1:

**Komponente I) (Tabelle 1):**

| Handelsname | Chemische Basis | Gehalt Gewichtsprozente |
|---|---|---|
| Silopren U 65, Momentive | vinylgruppenhaltiges Polydimethylsiloxan, Viskosität 20°C c. 65000 mPa.s | 84,40 |
| HDK-2000, Wacker | hydrophobierte hochdisperse Kieselsäure | 4,30 |
| Oil MH 15, Momentive | Methylhydrogenpolysiloxan | 11,30 |

**Komponente II) (Tabelle 2):**

| Handelsname | Chemische Basis | Gehalt Gewichtsprozente |
|---|---|---|
| Silopren U 65, Momentive | vinylgruppenhaltiges Polydimethylsiloxan, Viskosität 20°C c. 65000 mPa.s | 93,82 |
| | Wasser | 0,90 |
| HDK-2000, Wacker | hydrophobierte hochdisperse | 5,20 |
| | Kieselsäure | |
| UV LSR Cat, Momentiv | Platinkatalysator, UV aktivierbar | 0,08 |

Mischungsverhältnis Komponente II: Komponente I nach Gewichtsteilen = 1,4:1.

Zur Herstellung der Komponente I) werden die in der obigen Tabelle 1 angegebenen Bestandteile der Komponente I) in einem Rührtopf vermischt. Zur Herstellung der Komponente II) werden die in der obigen Tabelle 2 angegebenen Bestandteile der Komponente II) unter Lichtausschluss in einem Rührtopf vermischt. Die hergestellte Komponenten I) und II) werden bis zur Verwendung getrennt voneinander unter Ausschluss von Licht aufbewahrt.

Die Komponenten I) und II) werden anschließend in einem Mischungsverhältnis nach Gewichtsteilen von 1:1,4 (Komponente I: Komponente II) miteinander vermischt. Die so hergestellte Reaktionsmischung wird in Form einer in-situ an einem Bauteil angeschäumten Dichtung ("FIPFG") auf ein Gehäuseteil appliziert.

Die aufgetragene Reaktionsmischung wird mit einer UV-Blitzlampe (Xenon) (Fa. Blässing, Essen), mit einer Leistungsabgabe von 34,9 J/ Einzelblitz bei 12,5 Hz in einem Abstand von 40 mm für 120 sec. bei 25°C belichtet.

Nach der Belichtung bildet sich eine in-situ an einem Bauteil angeschäumte Dichtung ("FIPFG") auf dem Gehäuseteil aus.

Die hergestellte Reaktionsmischung kann vor der Belichtung mit der UV-Blitzlampe für mehrere Stunden stehengelassen werden, ohne dass die Mischung aushärtet oder aufschäumt. Nach dem Belichten bildet sich die aufgeschäumte Dichtung innerhalb von wenigen Sekunden bis Minuten aus.

### Beispiel 2:

**Komponente I) (Tabelle 3):**

| Handelsname | Chemische Basis | Gehalt Gewichtsprozente |
|---|---|---|
| Silopren U 10, Momentive | vinylgruppenhaltiges Polydimethylsiloxan, Viskosität 20°C c. 10000 mPa.s | 63,20 |
| Oil MH 15, Momentive | Methylhydrogenpolysiloxan | 11,60 |
| Silopren U Grundmischung H6, Momentive | QM Harz verstärktes vinylgruppenhaltiges Polydimethylsiloxan, Viskosität 20°C c. 6000 mPa.s | 18,70 |
| CAB-O-SIL TS 720, Cabot | mit Polydimethlysiloxan oberflächenbehandelte pyrogene Kieselsäure | 6,50 |

**Komponente II) (Tabelle 4):**

| Handelsname | Chemische Basis | Gehalt Gewichtsprozente |
|---|---|---|
| Silopren U 10, Momentive | vinylgruppenhaltiges Polydimethylsiloxan, Viskosität 20°C c. 10000 mPa.s | 61,00 |
| Silopren U Grundmischung H6, Momentive | QM Harz verstärktes vinylgruppenhaltiges Polydimethylsiloxan, Viskosität 20°C c. 6000 mPa.s | 12,00 |
| Silopren C 0.5, Momentive | hydroxylterminiertes Dimethylsiloxan | 18,70 |
| 1-Butanol | 1-Butanol | 1,90 |
| CAB-O-SIL TS 720, Cabot | mit Polydimethlysiloxan oberflächenbehandelte pyrogene Kieselsäure | 5,90 |
| UV LSR Cat, Momentiv | Platin-Katalysator, UV aktivierbar | 0,08 |
| Wasser | Wasser | 0,42 |

Zur Herstellung der Komponente I) werden die in der obigen Tabelle 3 angegebenen Bestandteile der Komponente I) in einem Rührtopf vermischt. Zur Herstellung der Komponente II) werden die in der obigen Tabelle 4 angegebenen Bestandteile der Komponente II) unter Lichtausschluss in einem Rührtopf vermischt. Die hergestellte Komponenten I) und II) werden bis zur Verwendung getrennt voneinander unter Ausschluss von Licht aufbewahrt.

Die Komponenten I) und II) werden anschließend in einem Mischungsverhältnis nach Gewichtsteilen von 1:1 miteinander vermischt. Die so hergestellte Reaktionsmischung wird in Form einer in-situ an einem Bauteil angeschäumten Dichtung ("FIPFG") auf ein Gehäuseteil appliziert.

Die aufgetragene Reaktionsmischung wird mit einer UV-Blitzlampe (Xenon) (Fa. Blässing, Essen), mit einer Leistungsabgabe von 34,9 J/ Einzelblitz bei 12,5 Hz in einem Abstand von 40 mm für 120 sec. bei 25°C belichtet.

Nach der Belichtung bildet sich eine in-situ an einem Bauteil angeschäumte Dichtung ("FIPFG") auf dem Gehäuseteil aus.

Die hergestellte Reaktionsmischung kann vor der Belichtung mit der UV-Blitzlampe für mehrere Stunden stehengelassen werden, ohne dass die Mischung aushärtet oder aufschäumt. Nach dem Belichten bildet sich die aufgeschäumte Dichtung innerhalb von wenigen Sekunden bis Minuten aus.

## Patentansprüche

1. Verwendung eines Mehrkomponentensystems umfassend
a) ein Polyorganosiloxan
b) ein Polyhydrogenorganosiloxan
c) einen photoaktivierbaren Katalysator
d) ein Treibmittel
wobei das Polyhydrogenorganosiloxan b) einer ersten Komponente I) und der photoaktivierbare Katalysator c) einer zweiten Komponente II) zugeordnet ist, die voneinander räumlich getrennt sind,
zur Herstellung einer in-situ an einem Bauteil angeschäumten Dichtung, wobei eine durch Mischen der Komponenten des Mehrkomponentensystems resultierende Reaktionsmischung mit Licht bestrahlt wird, **dadurch gekennzeichnet, dass** es sich bei dem Treibmittel d) um eine Verbindung mit zumindest einer Hydroxylgruppe oder um eine Mischung aus Verbindungen mit Hydroxylgruppen handelt

2. Verwendung nach Anspruch 1, **dadurch gekennzeichnet, dass** es sich bei dem Treibmittel d) um Wasser, einen Alkohol oder Mischungen daraus handelt.

3. Verwendung eines Mehrkomponentensystems nach Anspruch 2, **dadurch gekennzeichnet, dass** der Alkohol ein ein-, zwei- oder mehrwertiger Alkohol mit 1 bis 10 Kohlenstoffatomen ist, vorzugsweise Methanol, Ethanol, Propanol, vorzugsweise Isopropanol, Butanol, vorzugsweise 1-Butanol, 1,4-Butandiol, Laurylalkohol, Octylalkohol, 2-Ethylhexanol oder Ethylenglycol ist.

4. Verwendung eines Mehrkomponentensystems nach einem der vorherigen Ansprüche, **dadurch gekennzeichnet, dass** die Menge des Treibmittels d) 0,01 bis 10,0 Gew.-%, vorzugsweise 0,1 bis 5 Gew.-%, besonders bevorzugt 0,2 bis 3,0 Gew.-%, insbesondere bevorzugt 0,3 bis 2 Gew.-% beträgt, bezogen auf die Gesamtmenge des Mehrkomponentensystems.

5. Verwendung eines Mehrkomponentensystems nach einem der vorherigen Ansprüche, **dadurch gekennzeichnet, dass** das Treibmittel d) der zweiten Komponente II) zugeordnet ist.

6. Verwendung eines Mehrkomponentensystems nach einem der vorherigen Ansprüche, **dadurch gekennzeichnet, dass** das Polyorganosiloxan a) im Mittel mindestens zwei ungesättigte organische Gruppen pro Molekül aufweist, vorzugsweise im Mittel mindestens zwei Vinylgruppen pro Molekül aufweist, besonders bevorzugt im Mittel zwei terminale Vinylgruppen pro Molekül aufweist.

7. Verwendung eines Mehrkomponentensystems nach einem der vorherigen Ansprüche, **dadurch gekennzeichnet, dass** der photoaktivierbare Katalysator ein photoaktivierbarer Hydrosilylierungskatalysator ist, der mindestens ein Metall enthält, das ausgewählt ist aus der Gruppe bestehend aus Platin, Palladium, Rhodium, Nickel, Iridium und Ruthenium, vorzugsweise Platin enthält
und/oder
**dadurch gekennzeichnet, dass** der photoaktivierbare Katalysator eine organometallische Verbindung ist und/oder **dadurch gekennzeichnet, dass** der photoaktivierbare Katalysator ein η-Diolefin-σ-aryl-Platin-Komplex, ein (η-diolefin)-(sigma-aryl)-Platin-Komplex oder ein (η-diolefin) (sigma-alkyl)-Platin-Komplex ist.

8. Verwendung eines Mehrkomponentensystems nach einem der vorherigen Ansprüche zur Herstellung von Elektronikbauteilen, Gehäusen, vorzugsweise Schaltschränken, Leuchten, Fass- oder Filtergehäusen.

9. Verwendung eines Mehrkomponentensystems nach einem der vorherigen Ansprüche, **dadurch gekennzeichnet, dass** das Mehrkomponentensystem zusätzlich einen, zwei, drei oder mehr Füllstoffe umfasst.

10. Verwendung eines Mehrkomponentensystems nach einem der vorherigen Ansprüche, **dadurch gekennzeichnet, dass** das Mehrkomponentensystem zusätzlich Additive umfasst, vorzugsweise Additive zur Zellsteuerung von Schäumen.

11. Verwendung eines Mehrkomponentensystems nach einem der vorherigen Ansprüche, **dadurch gekennzeichnet, dass** das Polyorganosiloxan a) ein Polydimethylsiloxan ist, bei dem die Methyl-Gruppen zu mindestens 90 mol-% bezogen auf die Si-Atome vorliegen, bevorzugt 90 bis 99,99 mol-%.

12. Verwendung eines Mehrkomponentensystems nach einem der vorherigen Ansprüche, **dadurch gekennzeichnet, dass** Polyorganosiloxan a) der ersten Komponente I) und/oder der zweiten Komponente II) zugeordnet ist.

13. Verwendung eines Mehrkomponentensystems nach einem der vorherigen Ansprüche, **dadurch gekennzeichnet, dass** Polyhydrogenorganosiloxan b) einen SiH-Gehalt von mehr als 2 mmol/g, bevorzugt mehr als 7 mmol/g, besonders bevorzugt einen SiH-Gehalt von mehr als 10 mmol/g auf, insbesondere bevorzugt einen SiH-Gehalt von 14 bis 16 mmol/g auf, bezogen auf das Gesamtgewicht des jeweils eingesetzten Polyhydrogenorganosiloxans b).

14. Verwendung eines Mehrkomponentensystems nach einem der vorherigen Ansprüche, **dadurch gekennzeichnet, dass** das Licht eine Wellenlänge zwischen 180 und 700 nm, besonders bevorzugt zwischen 200 und 500 nm aufweist.

15. Verfahren zur Herstellung einer in-situ an einem Bauteil angeschäumten Dichtung umfassend die folgenden Schritte:- Bereitstellen oder Herstellen eines Mehrkomponentensystems wie in einem der Ansprüche 1 bis 14 definiert,
- Mischen der Komponenten des bereitgestellten oder hergestellten Mehrkomponentensystems, sodass eine Reaktionsmischung entsteht,
- Aufbringen der Reaktionsmischung auf die Oberfläche eines Bauteils und
- Bestrahlen der Reaktionsmischung mit Licht, vorzugsweise mit Licht einer Wellenlänge zwischen 180 und 700 nm.
wobei eine in-situ an einem Bauteil angeschäumte Dichtung erhalten wird.

## Claims

1. The use of a multi-component system comprising
a) a polyorganosiloxane
b) a polyhydrogen organosiloxane
c) a photoactivatable catalyst
d) a blowing agent
the polyhydrogen organosiloxane b) being assigned to a first component I) and the photoactivatable catalyst c) to a second component II), which components are spatially separated from one another,
for producing a seal foamed in situ on a component part, a reaction mixture that results by mixing the components of the multi-component system being irradiated with light, **characterized in that** the blowing agent d) is a compound having at least one hydroxyl group or a mixture of compounds having hydroxyl groups.

2. The use according to claim 1, **characterized in that** the blowing agent d) is water, an alcohol or mixtures thereof.

3. The use of a multi-component system according to claim 2, **characterized in that** the alcohol is a mono-, di- or polyhydric alcohol having 1 to 10 carbon atoms, preferably methanol, ethanol, propanol, more preferably isopropanol, butanol, even more preferably 1-butanol, 1,4-butanediol, lauryl alcohol, octyl alcohol, 2-ethylhexanol or ethylene glycol.

4. The use of a multi-component system according to one of the preceding claims, **characterized in that** the amount of blowing agent d) is 0.01 to 10.0 wt.%, preferably 0.1 to 5 wt.%, particularly preferably 0.2 to 3.0 wt.%, very particularly preferably 0.3 to 2 wt.%, based on the total amount of the multi-component system.

5. The use of a multi-component system according to one of the preceding claims, **characterized in that** the blowing agent d) is assigned to the second component II).

6. The use of a multi-component system according to one of the preceding claims, **characterized in that** the polyorganosiloxane a) comprises on average at least two unsaturated organic groups per molecule, preferably on average at least two vinyl groups per molecule, particularly preferably on average two terminal vinyl groups per molecule.

7. The use of a multi-component system according to one of the preceding claims, **characterized in that** the photoactivatable catalyst is a photoactivatable hydrosilylation catalyst containing at least one metal selected from the group consisting of platinum, palladium, rhodium, nickel, iridium and ruthenium, preferably contains platinum and/or **characterized in that** the photoactivatable catalyst is an organometallic compound and/or **characterized in that** the photoactivatable catalyst is a η-diolefin-σ-aryl-platinum complex, a (η-diolefin)-(sigma-aryl)-platinum complex or a (η-diolefin) (sigma-alkyl)-platinum complex.

8. The use of a multi-component system according to one of the preceding claims for the production of electronic component parts, housings, preferably switch cabinets, lights, drum housings or filter housings.

9. The use of a multi-component system according to one of the preceding claims, **characterized in that** the multi-component system additionally comprises one, two, three or more fillers.

10. The use of a multi-component system according to one of the preceding claims, **characterized in that** the multi-component system additionally comprises additives, preferably additives for cell control in foams.

11. The use of a multi-component system according to one of the preceding claims, **characterized in that** the polyorganosiloxane a) is a polydimethylsiloxane in which the methyl groups are present in an amount of at least 90 mol.% based on the Si atoms, preferably 90 to 99.99 mol.%.

12. The use of a multi-component system according to one of the preceding claims, **characterized in that** polyorganosiloxane a) is assigned to the first component I) and/or the second component II).

13. The use of a multi-component system according to one of the preceding claims, **characterized in that** polyhydrogen organosiloxane b) has an SiH content of more than 2 mmol/g, preferably more than 7 mmol/g, particularly preferably an SiH content of more than 10 mmol/g, more particularly preferably an SiH content of 14 to 16 mmol/g, based on the total weight of the polyhydrogen organosiloxane b) used in each case.

14. The use of a multi-component system according to one of the preceding claims, **characterized in that** the light has a wavelength between 180 and 700 nm, particularly preferably between 200 and 500 nm.

15. A method for producing a seal foamed in situ on a component part, comprising the following steps:
- providing or producing a multi-component system as defined in one of claims 1 to 14,
- mixing the components of the multi-component system provided or produced, so that a reaction mixture is formed,
- applying the reaction mixture to the surface of a component part and
- irradiating the reaction mixture with light, preferably with light of a wavelength between 180 and 700 nm,
a seal foamed in situ on a component part being obtained.

## Revendications

1. Utilisation d'un système à plusieurs constituants comprenant
a) un polyorganosiloxane
b) un polyhydrogénoorganosiloxane
c) un catalyseur photoactivable
d) un agent gonflant
le polyhydrogénoorganosiloxane b) étant associé à un premier constituant I), et le catalyseur photoactivable c) étant associé à un second constituant II), lesquels constituants sont séparés spatialement l'un de l'autre,
pour produire un joint d'étanchéité moussé in situ sur un composant, un mélange réactionnel obtenu en mélangeant les constituants du système à plusieurs constituants étant irradié avec une lumière, **caractérisée en ce que** l'agent gonflant d) est un composé comportant au moins un groupe hydroxyle ou un mélange de composés comportant des groupes hydroxyle.

2. Utilisation selon la revendication 1, **caractérisée en ce que** l'agent gonflant d) est de l'eau, un alcool ou leurs mélanges.

3. Utilisation d'un système à plusieurs constituants selon la revendication 2, **caractérisée en ce que** l'alcool est un alcool mono-, di- ou polyhydrique comportant de 1 à 10 atomes de carbone, de préférence du méthanol, de l'éthanol, du propanol, de préférence de l'isopropanol, du butanol, de préférence du 1-butanol, du 1,4-butanediol, de l'alcool laurylique, de l'alcool octylique, du 2-éthylhexanol ou de l'éthylène glycol.

4. Utilisation d'un système à plusieurs constituants selon l'une des revendications précédentes, **caractérisée en ce que** la quantité d'agent gonflant d) est de 0,01 à 10,0 % en poids, de préférence de 0,1 à 5 % en poids, plus préférentiellement de 0,2 à 3,0 % en poids, de manière particulièrement préférée de 0,3 à 2 % en poids, sur la base de la quantité totale du système à plusieurs constituants.

5. Utilisation d'un système à plusieurs constituants selon l'une des revendications précédentes, **caractérisée en ce que** l'agent gonflant d) est associé au second constituant II).

6. Utilisation d'un système à plusieurs constituants selon l'une des revendications précédentes, **caractérisée en ce que** le polyorganosiloxane a) présente en moyenne au moins deux groupes organiques insaturés par molécule, de préférence en moyenne au moins deux groupes vinyle par molécule, plus préférentiellement en moyenne deux groupes vinyle terminaux par molécule.

7. Utilisation d'un système à plusieurs constituants selon l'une des revendications précédentes, **caractérisée en ce que** le catalyseur photoactivable est un catalyseur d'hydrosilation photoactivable contenant au moins un métal choisi dans le groupe constitué par le platine, le palladium, le rhodium, le nickel, l'iridium et le ruthénium, de préférence contenant du platine,
et/ou
**caractérisée en ce que** le catalyseur photoactivable est un composé organométallique, et/ou
**caractérisée en ce que** le
catalyseur photoactivable est un complexe η-dioléfine-σ-aryl-platine, un complexe (η-dioléfine)-(sigma-aryl)-platine ou un complexe (η-dioléfine) (sigma-alkyl)-platine.

8. Utilisation d'un système à plusieurs constituants selon l'une des revendications précédentes pour la production de composants électroniques, de boîtiers, de préférence d'armoires de commande, de luminaires, de boîtiers de baril ou de filtre.

9. Utilisation d'un système à plusieurs constituants selon l'une des revendications précédentes, **caractérisée en ce que** le système à plusieurs constituants comprend en outre une, deux, trois charges ou plus.

10. Utilisation d'un système à plusieurs constituants selon l'une des revendications précédentes, **caractérisée en ce que** le système à plusieurs constituants comprend en outre des additifs, de préférence des additifs destinés au contrôle cellulaire de mousses.

11. Utilisation d'un système à plusieurs constituants selon l'une des revendications précédentes, **caractérisée en ce que** le polyorganosiloxane a) est un polydiméthylsiloxane dans lequel la teneur en groupes méthyle est d'au moins 90 % en moles par rapport aux atomes de Si, de préférence de 90 à 99,99 % en moles.

12. Utilisation d'un système à plusieurs constituants selon l'une des revendications précédentes, **caractérisée en ce que** le polyorganosiloxane a) est associé au premier constituant I) et/ou au second constituant II).

13. Utilisation d'un système à plusieurs constituants selon l'une des revendications précédentes, **caractérisée en ce que** le polyhydrogénoorganosiloxane b) présente une teneur en SiH supérieure à 2 mmol/g, de préférence supérieure à 7 mmol/g, plus préférentiellement une teneur en SiH supérieure à 10 mmol/g, de manière particulièrement préférée une teneur en SiH de 14 à 16 mmol/g, sur la base du poids total du polyhydrogénoorganosiloxane b) utilisé dans chaque cas.

14. Utilisation d'un système à plusieurs constituants selon l'une des revendications précédentes, **caractérisée en ce que** la lumière présente une longueur d'onde comprise entre 180 et 700 nm, plus préférentiellement entre 200 et 500 nm.

15. Procédé de production d'un joint d'étanchéité moussé in situ sur un composant, lequel procédé comprend les étapes suivantes :
- mise à disposition ou production d'un système à plusieurs constituants tel que défini dans l'une des revendications 1 à 14,
- mélange des constituants du système à plusieurs constituants mis à disposition ou produit, de sorte qu'un mélange réactionnel se forme,
- application du mélange réactionnel sur la surface d'un composant et
- irradiation du mélange réactionnel avec une lumière, de préférence avec une lumière d'une longueur d'onde comprise entre 180 et 700 nm,
ce qui permet d'obtenir un joint d'étanchéité moussé in situ sur un composant.
